(19) Europäisches Patentamt
European Patent Office
Office européen des brevets

(11) EP 2 830 015 A1

(12) **EUROPEAN PATENT APPLICATION**
published in accordance with Art. 153(4) EPC

(43) Date of publication:
28.01.2015 Bulletin 2015/05

(51) Int Cl.:
*G06Q 50/00* (2012.01)   *G06Q 50/10* (2012.01)

(21) Application number: 13764564.4

(86) International application number:
PCT/JP2013/057872

(22) Date of filing: 19.03.2013

(87) International publication number:
WO 2013/141252 (26.09.2013 Gazette 2013/39)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.03.2012 JP 2012063376**

(71) Applicant: **Kabushiki Kaisha Toshiba
Minato-ku
Tokyo 105-8001 (JP)**

(72) Inventors:
• **KAKIMOTO, Mitsuru**
  **Tokyo 105-8001 (JP)**
• **WATANDO, Hiroko**
  **Tokyo 105-8001 (JP)**
• **KOBAYASHI, Hideki**
  **Tokyo 105-8001 (JP)**

(74) Representative: **Granleese, Rhian Jane
Marks & Clerk LLP
90 Long Acre
London WC2E 9RA (GB)**

(54) **BIODIVERSITY EVALUATION INDEX COMPUTATION DEVICE, METHOD AND PROGRAM**

(57)   According to an embodiment, a biodiversity evaluation index calculation apparatus includes a first calculation unit, a second calculation unit, and a third calculation unit.

The first calculation unit calculates a vegetation/living-animal coefficient by referring to a vegetation database, the vegetation/living-animal coefficient representing at least one of diversity of plant species and diversity of animal species. The second calculation unit calculates a biodiversity value based on a type of a reserve and the vegetation/living-animal coefficient by referring to a reserve geography database, the biodiversity value representing biodiversity richness. The third calculation unit configured to calculate, for each of a plurality of mines, a biodiversity evaluation index by referring to a mine database, the biodiversity evaluation index representing a mining impact on biodiversity. The third calculation unit calculates the biodiversity evaluation index by adding biodiversity values of regions included in a mining impact range representing a range of an impact of mining on a peripheral environment.

F I G. 1

## Description

Technical Field

Embodiments of the present invention relate to a biodiversity evaluation index calculation apparatus, method, and program.

Background Art

Today's industries depend on mineral resources produced from mines. Particularly important are iron, copper, and aluminum, which are called base metals. Demand for base metals is continually growing along with the developing global economy. Recycling is still inadequate in terms of both quality and quantity, which leaves no alternative but to depend on mining to procure the mineral resources.

As has conventionally been pointed out, mines greatly impact their surrounding environments due to land alteration for mining, soil flowage upon mining, and the like. In addition, mines are considered to have a large impact on biodiversity as well. It is therefore important to quantitatively evaluate the impact of mining on biodiversity.

Citation List

Patent Literature

Patent Literature 1: Jpn. Pat. Appln. KOKAI No. 2003-102326

Summary of Invention

Technical Problem

However, since the impact on biodiversity is evaluated in accordance with the unique circumstances concerning the ecosystem of a certain site in question, impacts on biodiversity at different places are not compared. That is, no attempt has been made to uniformly estimate the impact of metal mines, which are widely distributed all over the world, on biodiversity.

It is an object of the present invention to provide a biodiversity evaluation index calculation apparatus, method, and program capable of quantitatively evaluating the impact of each mine on biodiversity based on a uniform standard.

Solution to Problem

According to an embodiment, a biodiversity evaluation index calculation apparatus includes a first calculation unit, a second calculation unit, and a third calculation unit. The first calculation unit is configured to calculate, for each of a plurality of regions, a vegetation/living-animal coefficient by referring to a vegetation database which stores data about vegetation classifications, the vegetation/living-animal coefficient representing at least one of diversity of plant species and diversity of animal species. The second calculation unit is configured to calculate, for each of the plurality of regions, a biodiversity value based on a type of a reserve and the vegetation/living-animal coefficient by referring to a reserve geography database which describes a type and a range for each of a plurality of reserves, the biodiversity value representing biodiversity richness. The third calculation unit is configured to calculate, for each of a plurality of mines, a biodiversity evaluation index by referring to a mine database which describes a position, an output, a purity, and a mineral species for each of the plurality of mines, the biodiversity evaluation index representing a mining impact on biodiversity, the third calculation unit calculating a mining impact range, which represents a range of an impact of mining on a peripheral environment, based on the output, the purity, and the mineral species, specifying one or more of regions included in the mining impact range out of the plurality of regions, and calculating the biodiversity evaluation index by adding biodiversity values of the one or more of regions.

Brief Description of Drawings

FIG. 1 is a block diagram schematically showing a biodiversity evaluation index calculation apparatus according to the first embodiment.
FIG. 2 is a view showing the correspondence table of vegetation classifications and vegetation/living-animal coefficients to be referred to by a vegetation/living-animal coefficient calculation unit shown in FIG. 1.

FIG. 3 is a view for explaining a method of calculating a vegetation/living-animal coefficient by the vegetation/living-animal coefficient calculation unit shown in FIG. 1.

FIG. 4 is a view showing the correspondence table of reserve classification numbers and reserve coefficients according to the first embodiment.

FIG. 5 is a view schematically showing the arrangement of cells and reserves.

FIG. 6 is a view for explaining a hierarchical algorithm to be used by a biodiversity value calculation unit shown in FIG. 1 to calculate a biodiversity value.

FIG. 7 is a block diagram showing a biodiversity evaluation index calculation unit shown in FIG. 1 in more detail.

FIG. 8 is a view schematically showing a mining impact range.

FIG. 9 is a view for explaining an example of a method of searching for a biological reserve overlapping a mining impact range according to the second embodiment.

FIG. 10 is a block diagram schematically showing a biodiversity evaluation index calculation apparatus according to the second embodiment.

FIG. 11 is a view for explaining a method of calculating a biodiversity value according to the second embodiment.

FIG. 12 is a flowchart showing an example of the operation of the biodiversity evaluation index calculation apparatus shown in FIG. 10.

FIG. 13 is a block diagram schematically showing a biodiversity evaluation index calculation apparatus according to the third embodiment.

FIG. 14 is a flowchart schematically showing an example of the operation of a procurement decision making assisting unit shown in FIG. 13.

FIG. 15 is a view showing comparison between the biodiversity evaluation indices of a gasoline car and those of an electric vehicle.

FIG. 16 is a view for explaining the difference between a calculation result by a calculation algorithm according to the first embodiment and a calculation result by a calculation algorithm according to the second embodiment.

FIG. 17 is a view for explaining an example of a result obtained by calculating biodiversity evaluation indices in accordance with the first and second embodiments.

FIG. 18 is a block diagram schematically showing a biodiversity evaluation index calculation apparatus according to the fourth embodiment.

FIG. 19 is a view showing an example of mine operation plan data shown in FIG. 18.

FIG. 20 is a view for explaining variables shown in FIG. 19.

FIG. 21 is a block diagram schematically showing a biodiversity evaluation index calculation apparatus according to the fifth embodiment.

FIG. 22 is a block diagram schematically showing a biodiversity evaluation index calculation unit shown in FIG. 19.

FIG. 23 is a block diagram schematically showing a biodiversity evaluation index calculation unit according to the first example of the fifth embodiment.

FIG. 24 is a graph for explaining a method of calculating a precipitation impact index by a precipitation impact evaluation unit shown in FIG. 20.

FIG. 25 is a graph for explaining another method of calculating the precipitation impact index by the precipitation impact evaluation unit shown in FIG. 20.

FIG. 26 is a block diagram schematically showing a biodiversity evaluation index calculation unit according to the second example of the fifth embodiment.

FIG. 27 is a block diagram schematically showing a biodiversity evaluation index calculation unit according to the third example of the fifth embodiment.

FIG. 28 is a view showing a mining impact range calculated by a mining impact range calculation unit shown in FIG. 27.

Brief Description of Embodiments Biodiversity evaluation index calculation apparatuses and methods according to the embodiments will now be described with reference to the accompanying drawings. Note that the same reference numerals denote parts that perform the same operations in the following embodiments, and a repetitive description thereof will be omitted.

(First Embodiment)

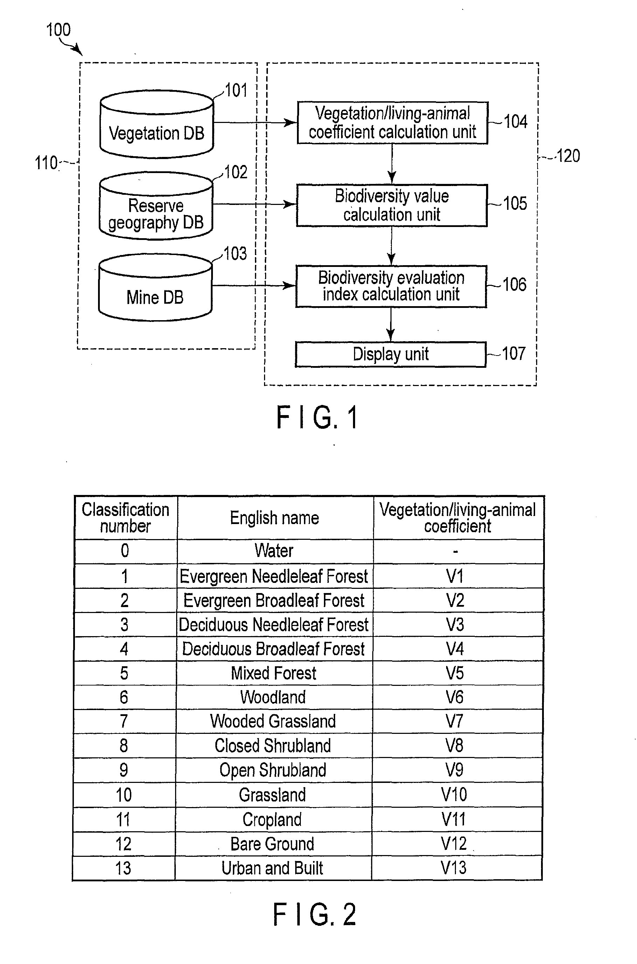

FIG. 1 schematically shows a biodiversity evaluation index calculation apparatus 100 according to the first embodiment. As shown in FIG. 1, the biodiversity evaluation index calculation apparatus 100 includes a vegetation database 101, a reserve geography database 102, a mine database 103, a vegetation/living-animal coefficient calculation unit 104, a biodiversity value calculation unit 105, a biodiversity evaluation index calculation unit 106, and a display unit 107. Biodiversity described herein includes ecosystem diversity, species diversity, and genetic diversity.

The biodiversity evaluation index calculation apparatus 100 according to the present embodiment can be implemented by causing an arithmetic processing device 120 such as a CPU to execute a control program stored in a storage device 110 including a ROM, a RAM, and an HDD. For example, the arithmetic processing device 120 reads out the control program from the ROM or the HDD and loads the control program on the RAM, thereby functioning as the vegetation/living-animal coefficient calculation unit 104, the biodiversity value calculation unit 105, and the biodiversity evaluation index calculation unit 106. In addition, the storage device 110 functions as the vegetation database 101, the reserve geography database 102, and the mine database 103. The biodiversity evaluation index calculation apparatus 100 can be implemented by one arithmetic processing device or a plurality of arithmetic processing devices.

The vegetation database (DB) 101 stores data about vegetation classifications. As the data about vegetation classifications, detailed worldwide vegetation data obtained by remote sensing is usable. The classifications include vegetation types and the distribution of each type (for example, the ratio of a type of vegetation in a region). In an example of vegetation data, the vegetation is classified into 14 types, as shown in FIG. 2. This classification complies with a standard land classification proposed by IGBP (International Geosphere-Biosphere Programme). In this vegetation data, a world map is divided into a plurality of cells (regions), and a vegetation type is assigned to each cell. Each cell is a square region having a 1-km long side. That is, the resolution is 1 km.

Note that the vegetation classification is not limited to the example complying with the classification of IGBP, and any other classification is applicable as long as it concerns vegetation.

The vegetation/living-animal coefficient calculation unit 104 calculates a vegetation/living-animal coefficient based on a vegetation classification. For example, the vegetation/living-animal coefficient calculation unit 104 converts a vegetation classification into a vegetation/living-animal coefficient using the correspondence table shown in FIG. 2. The vegetation/living-animal coefficient is a value weighted by at least one of vegetation and living animals on land and in water areas, and represents at least one of the diversity of plant species and the diversity of animal species. The species diversity is determined using at least the number of species as an index. In the present embodiment, the vegetation/living-animal coefficient value is set higher as the species diversity increases (that is, as the number of species increases). For example, a forest (corresponding to classification numbers 1 to 5 in FIG. 2) is home to diverse plants and animals, and therefore has a high vegetation/living-animal coefficient. On the other hand, a desert (corresponding to classification number 12 in FIG. 2) is poor in both the numbers and types of plants and animals. In an urban district (corresponding to classification number 13 in FIG. 2), natural ecosystems are basically eliminated while placing importance on the productivity of human activities. For these reasons, deserts and urban districts have low vegetation/living-animal coefficients. Referring to FIG. 2, specific numerical values are given to V1 to V13 in the fields of vegetation/living-animal coefficients. Note that classifications whose species diversity levels can be regarded as the same may be given the same value. For example, V1 may have the same value as V2.

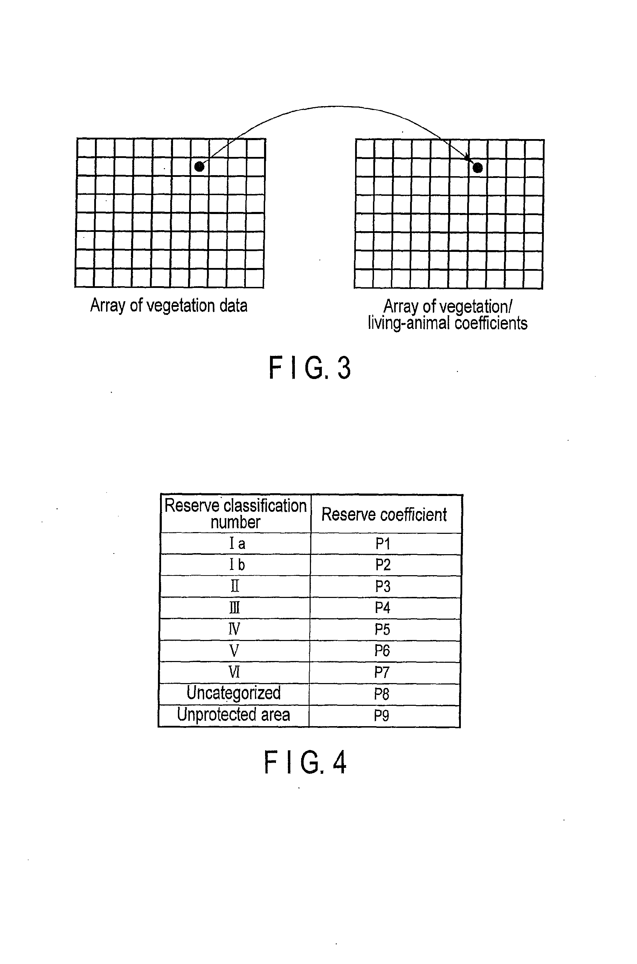

Vegetation data is, for example, two-dimensional array data. The position of each element (cell) of the array is specified by the latitude and longitude. The vegetation/living-animal coefficient calculation unit 104 generates an array by converting the value of each element into a vegetation/living-animal coefficient, as shown in FIG. 3. In FIG. 3, one square lattice represents one cell.

In the present embodiment, an example will be described in which biodiversity evaluation indices are calculated for land. For this reason, no vegetation/living-animal coefficients are set for water areas (classification number 0) such as lakes and seas, as shown in FIG. 2. In another embodiment, biodiversity evaluation indices are calculated for both land and water areas. In this case, as a vegetation/living-animal coefficient in water areas, a value weighted according to the diversity of species such as seaweed and fish is set. Ecosystems in water areas, particularly, in seas are very important from the viewpoint of biodiversity. When the water areas are also taken into consideration, the mining impact on biodiversity can more accurately be evaluated.

The reserve geography DB 102 stores reserve data that describes the type and the range for each of a plurality of reserves. The planet has areas considered to be especially valuable for maintaining biodiversity; for example, an area where many organisms (plants and animals) native to the land live. These areas are designated in the forms of biological reserves, hotspots, national parks, and the like. These areas especially greatly impact biodiversity. In an example of reserve data, reserves are classified into eight levels (Ia, Ib, II, III, IV, V, VI, and uncategorized). This classification complies with the IUCN (International Union for Conservation of Nature) categories. Note that the reserve classification is not limited to the example complying with the IUCN categories, and any other classification is applicable.

FIG. 4 shows a correspondence table to be used to convert a reserve classification into a reserve coefficient. The reserve coefficient is a value weighted by a reserve defined in a land or sea area managed legally or by another effective method for the purpose of protecting biodiversity, natural resources, and associated cultural resources, and is applied to an area that needs protection from the viewpoint of at least one of ecosystem diversity, species diversity, and genetic diversity. In the present embodiment, the reserve coefficient value is set higher as the degree of importance (for example, degree of intervention of management, degree of importance of management, or urgency) increases. Referring to FIG. 4, specific numerical values are given to P1 to P9 in the fields of reserve coefficients. Note that classifications whose degrees of importance of reserve can be regarded as the same may be given the same value. Note also that the reserve coefficient can be calculated by the biodiversity value calculation unit 105 using the correspondence table shown in FIG. 4, or may be calculated in advance and stored in the reserve geography DB 102.

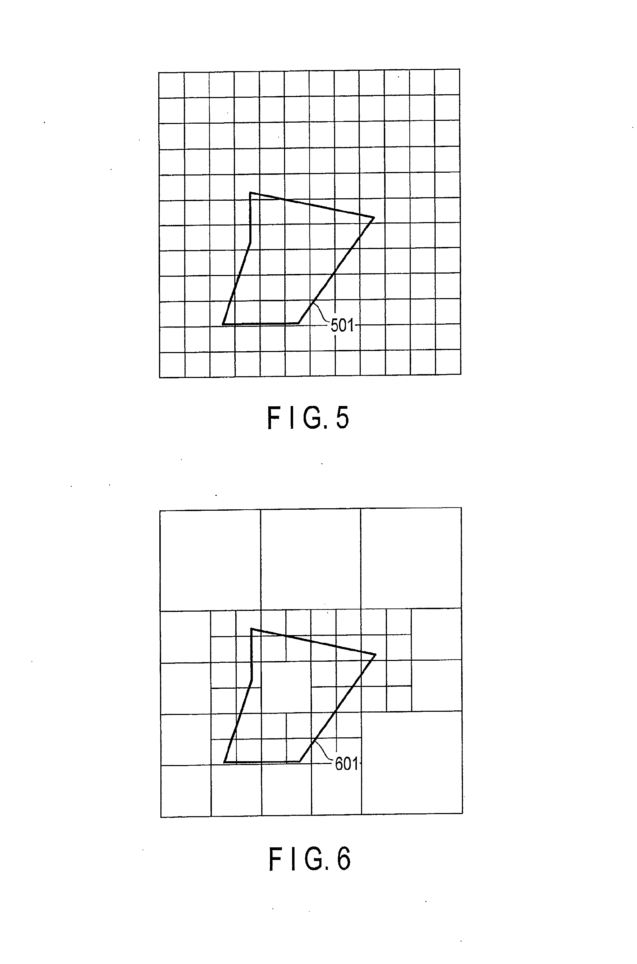

The biodiversity value calculation unit 105 calculates a biodiversity value based on a vegetation/living-animal coefficient and a reserve coefficient. The biodiversity value represents biodiversity richness reflecting diversity of organism species mainly derived from vegetation and at least one of ecosystem diversity, species diversity, and genetic diversity based on the presence/absence of reserves. In the present embodiment, the biodiversity value is defined by the product of the vegetation/living-animal coefficient and the reserve coefficient. The biodiversity value calculation unit 105 basically calculates the biodiversity value by multiplying the vegetation/living-animal coefficient by the reserve coefficient for each cell. However, as shown in FIG. 5, the boundaries of a reserve 501 do not necessarily match the boundaries of cells. Hence, the following processing is performed.

First, the biodiversity value calculation unit 105 selects a portion where a cell i overlaps the reserve, and calculates a ratio $\alpha_i$ of the area of the overlap portion to the area of the cell i by

$$\alpha_i = \frac{\text{Area of overlap portion}}{\text{Area of cell i}} \qquad (1)$$

Next, the biodiversity value calculation unit 105 calculates the biodiversity value of the cell i by, for example,

$$\text{Biodiversity value} = \text{Vegetation/living-animal}$$
$$\text{coefficient} \times [(1 - \alpha_i) + \alpha_i \times \text{Reserve coefficient}] \qquad (2)$$

Since there are a lot of cells, calculating the biodiversity values for all of them takes much time. In addition, the biodiversity value needs to be calculated every time at least one of the vegetation DB 101 and the reserve geography DB 102 is updated. As will be described later, since the range of the impact of mining on biodiversity is assumed to be several km, a resolution of about 1 km is necessary to calculate a biodiversity evaluation index representing the mining impact on biodiversity. That is, it is not preferable to lower the resolution to decrease the number of cells. In the present embodiment, the biodiversity value calculation unit 105 calculates the biodiversity value in accordance with a hierarchical algorithm to be described next, thereby speeding up the calculation.

The hierarchical algorithm will be described next with reference to FIG. 6. In the hierarchical algorithm, a peripheral region including a biological reserve 601 is divided into a plurality of lattices. The lattice is a region larger than a cell. The lattice size is typically set to be $2^n$ times larger than the cell size, where n is a natural number and is set such that the scale of the lattice almost equals that of the target biological reserve. In the example of FIG. 6, the lattice is a square region having a 4-km long side.

Next, it is determined whether the individual lattices overlap the biological reserve. When a lattice overlaps the biological reserve, it is determined whether the size of the lattice is larger than the cell size. If the size of the lattice is larger than the cell size, the lattice is divided into a plurality of (for example, four) sublattices. Additionally, it is determined whether individual sublattices overlap the biological reserve. This processing is recursively repeated in a similar manner until the size of the sublattice after division equals the cell size. As a result, the peripheral region of the biological reserve 601 is divided by lattices of different sizes, as shown in FIG. 6.

A lattice (or sublattice) that does not overlap the biological reserve does not contribute to biodiversity in the biological reserve. That is, the biodiversity value is calculated as $\alpha_i = 0$. In a lattice (or sublattice) located within the biological reserve, the biodiversity value is calculated for each cell in the lattice in accordance with equation (2) by setting $\alpha_i = 1$. For a cell that partially overlaps the biological reserve, the ratio $\alpha_i$ is calculated in accordance with equation (1), and the biodiversity value is calculated in accordance with equation (2).

This hierarchical algorithm can greatly decrease the number of times of searching for a portion where a lattice overlaps the biological reserve and the number of times of calculating the area of the overlap portion. It is therefore possible to execute the biodiversity value calculation at a higher speed.

The mine DB 103 stores data about a plurality of mines by associating mine positions, annual outputs, purities, and mineral species with each other. The term purity represents the ratio of the mass of a mineral contained in an ore to the mass of the ore.

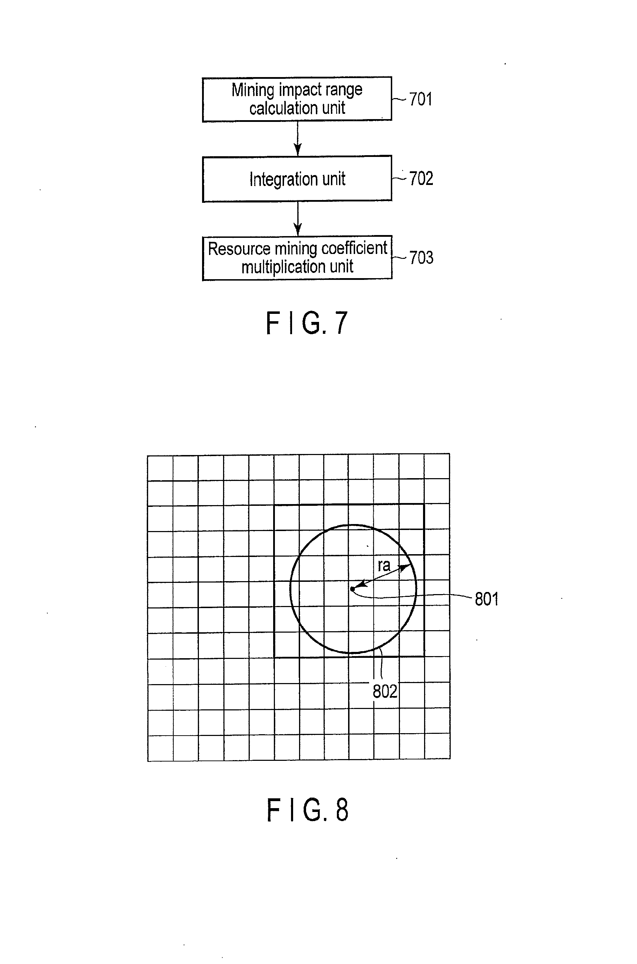

The biodiversity evaluation index calculation unit 106 calculates, for each mine, a biodiversity evaluation index, which represents the mining impact on biodiversity, based on a vegetation/living-animal coefficient and a biodiversity value by referring to the mine DB 103. Specifically, as shown in FIG. 7, the biodiversity evaluation index calculation unit 106 includes a mining impact range calculation unit 701, an integration unit 702, and a resource mining coefficient multiplication unit 703. A method of calculating the biodiversity evaluation index of one mine included in the mine DB 103 by the biodiversity evaluation index calculation unit 106 will be described below. For the remaining mines included in the mine DB 103 as well, the biodiversity evaluation indices can similarly be calculated.

The mining impact range calculation unit 701 calculates a mining impact range representing the range of the impact of mining on the peripheral environment. The causes of the mining impact on the peripheral environment are assumed to be, for example, deforestation for mining, flowage of soil dug up, and outflow of toxic substances contained in soils. In the present embodiment, the mining impact range is assumed to be a circular region 802 having a certain range from a center 801 of a mine, as shown in FIG. 8. Let $r_a$ be the radius of the mining impact range. The larger the scale of the mine is, the larger the radius $r_a$ is. The scale can be estimated from the annual output of the mine. The annual output of the mine is estimated as a value obtained by dividing the annual mineral output by the purity of the ore. The output represents the amount of soil or ore dug up. The radius $r_a$ is calculated by, for example,

$$r_a = A \times \left( \frac{Annual\,output}{Purity} \right)^{\frac{1}{3}} \qquad (3)$$

In this case, the mining impact is assumed to be three-dimensionally spread, including underground, and increases in inverse proportion to the purity of the ore.

A coefficient A is decided such that the radius $r_a$ is 10 km for the mine of the world's largest scale. The annual output of the mine of the world's largest scale is about 1,680,000 t.

The integration unit 702 calculates an integrated value by adding the biodiversity values of cells within the mining impact range. For example, the integration unit 702 calculates the integrated value by

$$Integrated\,value = \sum_{Cell\,i \in Mining\,impact\,range} \left[ \beta_i \times Biodiversity\,value \right] \qquad (4)$$

where $\beta_i$ is the ratio of the area of a portion where the cell i overlaps the mining impact range to the area of the cell i, as indicated by

$$\beta_i = \frac{Area\,of\,portion\,included\,in\,mining\,impact\,range\,r_a\,of\,cell\,i}{Area\,of\,cell\,i}$$

$$(5)$$

More specifically, the integration unit 702 specifies the range of cells that may be impacted by the mine as a rectangle based on the position of the mine and the radius $r_a$ of the mining impact range. Next, the integration unit 702 calculates the ratios $\beta_i$ of all cells in the rectangular range by equation (5), and calculates the integrated value by equation (4).

The resource mining coefficient multiplication unit 703 first calculates a resource mining coefficient based on the purity of the ore. When the purity of the ore is low, mining in a larger quantity is necessary to obtain a predetermined output, and the mining impact on biodiversity is large. The resource mining coefficient represents the magnitude of the mining impact on biodiversity based on the purity of the ore. The resource mining coefficient is calculated by, for example,

$$Resource\,mining\,coefficient = \frac{Annual\,output}{Purity} \times Mineral\,species\,index$$

$$(6)$$

A mineral species index is a weight coefficient that is set for each mineral species. For example, water usage, outflow of toxic substances, and the like change depending on the mineral species. The mineral species index is decided for each mineral species in consideration of the impact on biodiversity caused by the water usage, outflow of toxic substances, and the like. Note that the resource mining coefficient multiplication unit 703 may calculate the resource mining coefficient without using the mineral species index, that is, by setting the mineral species index to 1.

The resource mining coefficient multiplication unit 703 calculates a biodiversity evaluation index by multiplying the resource mining coefficient by the integrated value, as indicated by, for example,

$$Biodiversity\ evaluation\ index = Resource\ mining$$
$$coefficient \times Integrated\ value \qquad (7)$$

The display unit 107 is a display device such as a liquid crystal display. The display unit 107 displays the biodiversity evaluation indices calculated for the respective mines.

As described above, the biodiversity evaluation index calculation apparatus according to the first embodiment uses the vegetation DB that stores data about the distribution of vegetation classifications, the reserve geography DB that stores data about reserves, and the mine DB that stores data about a plurality of mines by associating mine positions, annual outputs, purities, and mineral species with each other. This makes it possible to quantitatively evaluate the impact of each of a plurality of mines existing all over the world on biodiversity based on a uniform standard.

(Second Embodiment)

In the second embodiment, a method of further speeding up the calculation processing of the first embodiment will be described. In the first embodiment, a world map is divided into a plurality of cells, and the biodiversity values of all cells are calculated. There exist many reserves all over the world, the number of which exceeds 160,000. On the other hand, the number of mines present all over the world is not enormous, and the mining impact ranges are only part of the whole world. Hence, when calculating the biodiversity value, the reserves need not be taken into consideration for calculation of the biodiversity evaluation indices of most mines. In the present embodiment, the calculation speed can be increased by limiting reserves as the subject of biodiversity value calculation to only those within a mining impact range.

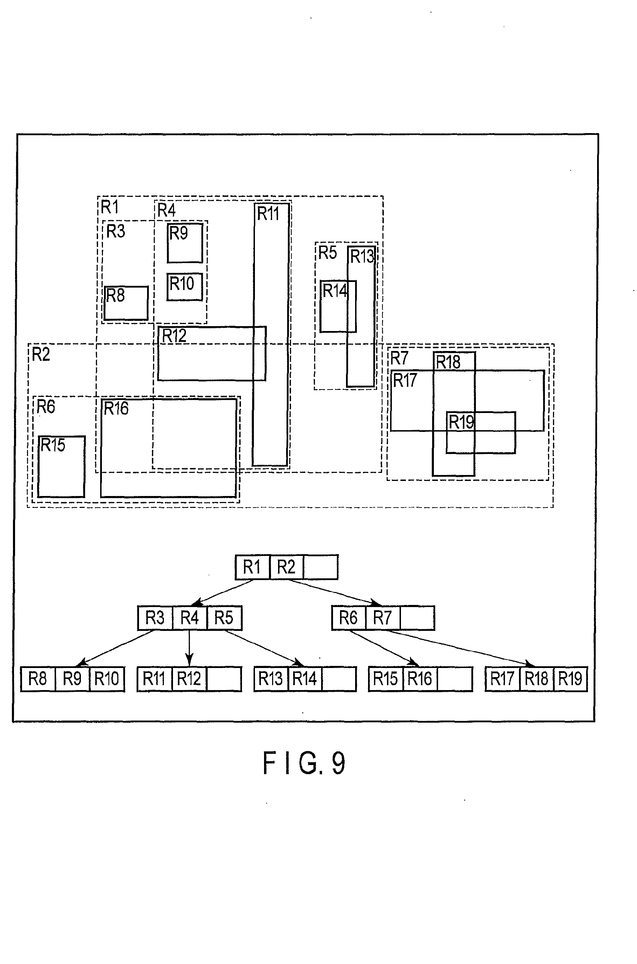

The point of using a calculation algorithm according to the second embodiment is that, for a certain mine, a biological reserve that overlaps the mining impact range of the mine is searched for. To search for a biological reserve that overlaps the mining impact range, a data structure called an R-tree often used in geographical space information processing can be used. R-tree has a data structure similar to a B-tree and is used to index multidimensional information (for example, two-dimensional coordinate data), that is, for a spatial index. FIG. 9 shows the data structure of the R-tree. In R-tree, regions are handled based on rectangles. Rectangles included in other rectangles are hierarchically nested and expressed as a tree structure. The lowermost layer (leaves) has rectangles including target data (position or region). Querying of the R-tree is also performed based on rectangles. It is possible to designate a rectangle and acquire a leaf that overlaps the rectangle. Querying can be done at high speed by using the tree structure. Note that the method of searching for a biological reserve that overlaps the mining impact range is not limited to the example using R-tree, and any method is usable.

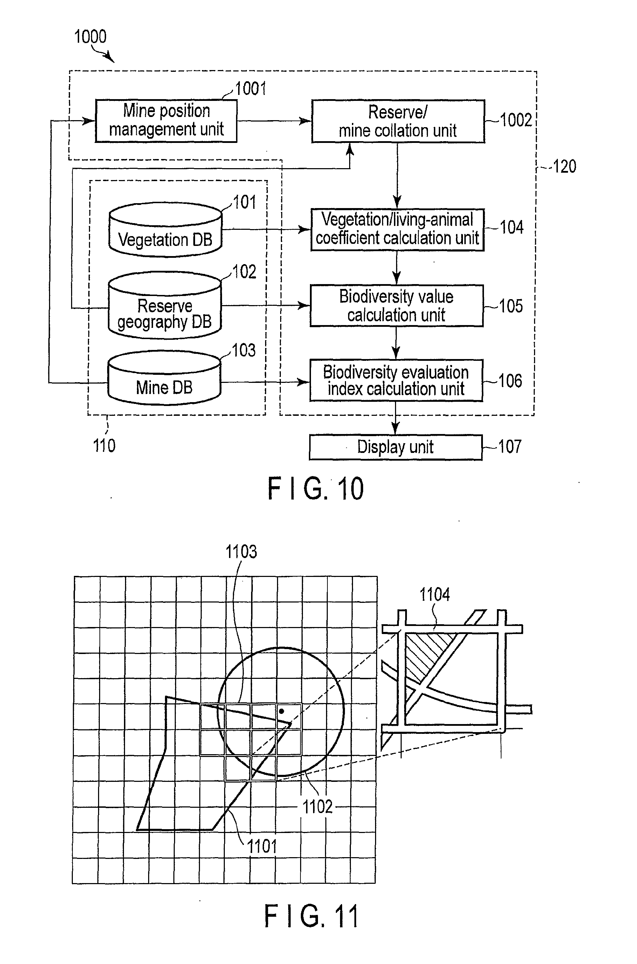

FIG. 10 schematically shows a biodiversity evaluation index calculation apparatus 1000 according to the second embodiment. The biodiversity evaluation index calculation apparatus 1000 shown in FIG. 10 includes a mine position management unit 1001, and a reserve/mine collation unit 1002 in addition to the arrangement of the biodiversity evaluation index calculation apparatus 100 shown in FIG. 1. The mine position management unit 1001 and the reserve/mine collation unit 1002 can be implemented by an arithmetic processing device 120, like a vegetation/living-animal coefficient calculation unit 104, a biodiversity value calculation unit 105, and a biodiversity evaluation index calculation unit 106.

The mine position management unit 1001 refers to a mine DB 103, and manages position information about the positions of mines using the R-tree. The reserve/mine collation unit 1002 performs matching between a mine position and a reserve position based on the reserve geography DB 1002 and the position information from the mine position management unit 1001, and specifies cells whose biodiversity values should be calculated. FIG. 11 shows an example of cells whose biodiversity values should be calculated. As shown in FIG. 11, the cells whose biodiversity values should be calculated are cells in which a reserve 1101 and a mining impact range 1102 overlap, that is, cells in a region 1103 surrounded by the thick lines here. As can be seen from FIG. 11, the number of cells as the subject of biodiversity value calculation greatly deceases.

The biodiversity evaluation index calculation unit 106 calculates a biodiversity evaluation index by adding contributions of all cells in the region 1103 shown in FIG. 11. For example, the biodiversity evaluation index is calculated by

$$BEI = \left[ \sum_{Cell\,i \in Reserve \cap Mining\,impact\,range} VLC \times (\beta_i - \gamma_i + \gamma_i \times RC) \right] \times RMC \qquad (8)$$

where BEI denotes the biodiversity evaluation index, VLC denotes the vegetation/living-animal coefficient, RC denotes the reserve coefficient, RMC denotes the resource mining coefficient, and $\gamma_i$ is the ratio of the area of a portion where the reserve and the mining impact range overlap in a cell i to the area of the cell i, as indicated by

$$\gamma_i = \frac{Area\,of\left(Reserve\,in\,cell\,i \cap Mining\,impact\,range\right)}{Area\,of\,cell\,i} \qquad (9)$$

In a cell 1104 whose enlarged view is shown in FIG. 11, the portion where the reserve and the mining impact range overlap is indicted by hatching.

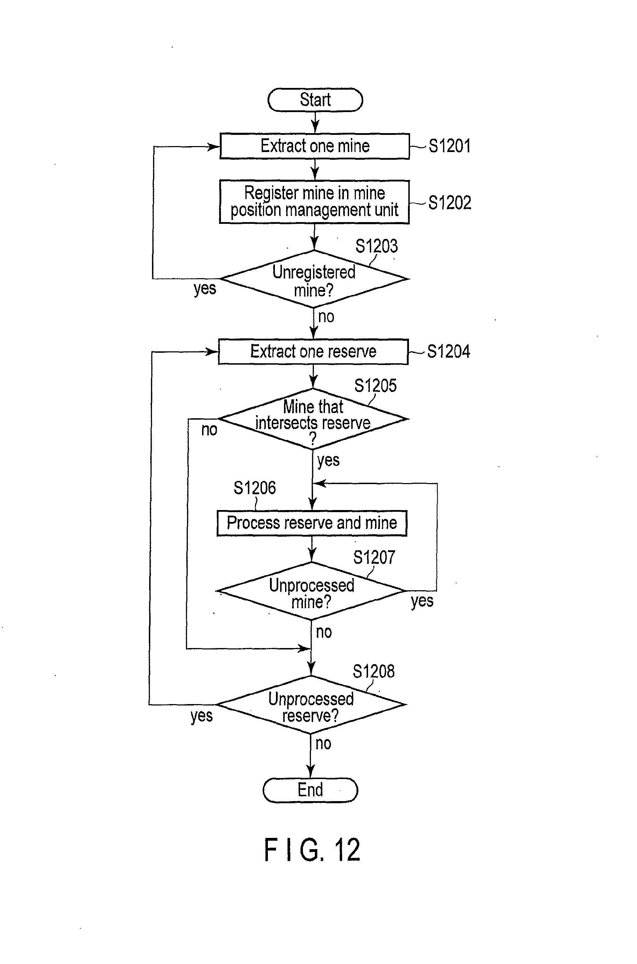

The calculation algorithm according to the second embodiment will be described next with reference to FIG. 12.

First, the biodiversity evaluation indices of all mines are initialized to 0. In step S1201, one of the plurality of mines stored in the mine DB 103 is selected. In step S1202, this mine is registered in the mine position management unit 1001. The mine position management unit 1001 stores the mine together with position information. For example, the mine position management unit 1001 calculates a rectangle (mine rectangle) surrounding the mining impact range, and registers the mine rectangle in the R-tree. In step S1203, it is determined whether all mines in the mine DB 103 are registered in the mine position management unit 1001. If an unregistered mine remains, the process returns to step S1201. When all mines are registered in the mine position management unit 1001, the process advances to step S1204.

In step S1204, one of the plurality of reserves stored in the reserve geography DB 102 is selected. In step S1205, the reserve/mine collation unit 1002 searches for a mine that intersects the reserve by referring to the mine position management unit 1001. For example, the reserve/mine collation unit 1002 calculates a rectangle (reserve rectangle) surrounding the reserve, queries the R-tree using the reserve rectangle, and selects all mine rectangles that overlap the reserve rectangle. If a mine that intersects the reserve exists, the process advances to step S1206. Otherwise, the process advances to step S1208.

In step S1206, the biodiversity evaluation index of one of the mines detected in step S1205 is calculated. More specifically, first, cells where the reserve and the mine overlap are specified. Next, the vegetation/living-animal coefficient calculation unit 104 calculates a vegetation/living-animal coefficient for each of the specified cells, and the biodiversity value calculation unit 105 calculates a biodiversity value for each of the specified cells. In addition, the biodiversity evaluation index calculation unit 106 calculates the biodiversity evaluation index in accordance with equation (8).

In step S1207, it is determined whether an unprocessed mine exists among the mines detected in step S1205. If an unprocessed mine exists, the process returns to step S1206. Otherwise, the process advances to step S1207.

In step S1207, it is determined whether all reserves stored in the reserve geography DB 102 have been processed. If an unprocessed reserve exists, the process returns to step S1205. If all reserves stored have been processed, the series of processes ends.

As described above, according to the second embodiment, the biodiversity values are calculated for reserves overlapping a mining impact range, thereby increasing the calculation speed.

The difference between the calculation result of the calculation algorithm according to the first embodiment and the calculation result of the calculation algorithm according to the second embodiment will be described next.

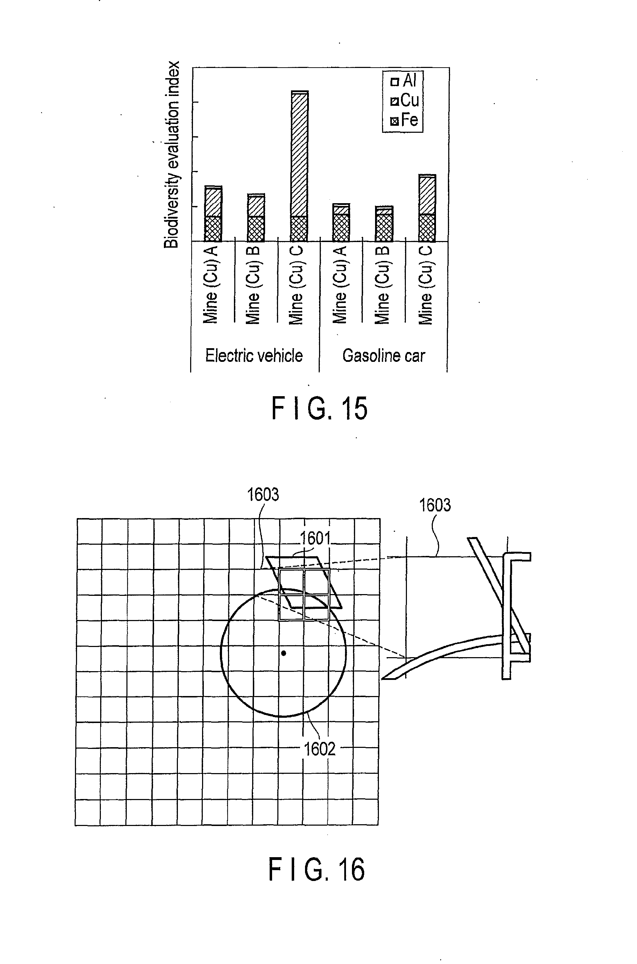

The biodiversity evaluation index calculated by the calculation algorithm (to be referred to as a basic algorithm) according to the first embodiment does not strictly match the biodiversity evaluation index calculated by the calculation algorithm (to be referred to as a high-speed algorithm) according to the second embodiment. This will be explained with reference to FIG. 16. A cell 1603 shown in FIG. 16 intersects both a reserve 1601 and a mining impact range 1602. In the basic algorithm, the cell 1603 contributes to calculation of the biodiversity evaluation index of the mine. However, the reserve 1601 does not overlap the mining impact range 1602 in the cell 1603. Hence, in the high-speed algorithm, the cell 1603 does not contribute to calculation of the biodiversity evaluation index of the mine. More specifically, intersection of the cell and the reserve means $\alpha > 0$, and intersection of the cell and the mining impact range means $\beta > 0$. On the other hand, inexistence of intersection of the reserve and the mining impact range in the cell means $\gamma = 0$. As is apparent from comparison between equations (2) and (4) used in the basic algorithm and equation (8) used in the high-speed algorithm, $\alpha \times \beta$ is replaced with $\gamma$. In general, $\alpha \times \beta \neq \gamma$. As a result, the calculation result of the basic algorithm and that of the high-speed algorithm have a difference.

The high-speed algorithm accurately refers to the overlap between the reserve and the mining impact range. Hence, from the viewpoint of biodiversity evaluation index calculation, it can be said that the high-speed algorithm realizes a certain degree of accuracy, in principle. In this sense, the basic algorithm can be regarded as an approximation of $\gamma \sim \alpha \times \beta$. This is because the basic algorithm calculates the biodiversity value and the biodiversity evaluation index in different phases, and does not consider the position and size of the mining impact range when calculating the biodiversity value.

However, as will be described below in detail, the calculation result of the basic algorithm and that of the high-speed algorithm are basically the same, in terms of practical use. In addition, the biodiversity value intermediately output by the basic algorithm is not only a value used for calculation of the biodiversity evaluation index but also a meaningful amount for evaluating the value of land, and can be expected to be applied variously. Hence, the high-speed algorithm is adequate for biodiversity evaluation index calculation itself. Nevertheless, the basic algorithm is not obsolete, and the two algorithms can selectively be used as needed in accordance with the application purpose.

An example of biodiversity evaluation index calculation will be described next.

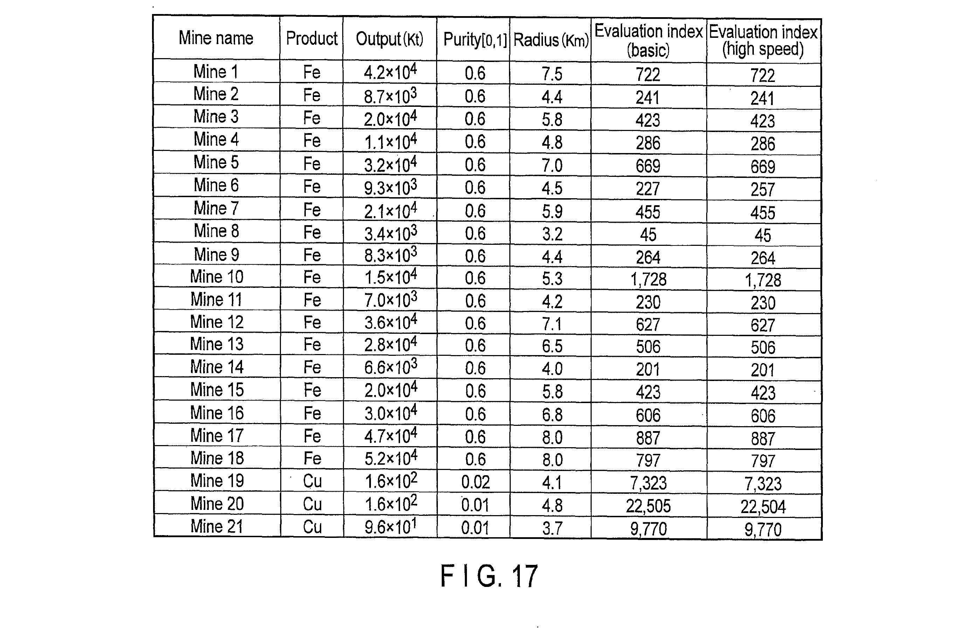

In the calculation example, existing data are used as vegetation data and reserve data. As mine data, for example, data extracted from 21 copper and iron mines existing in a predetermined area are used. FIG. 17 shows the results of calculating biodiversity evaluation indices based on these data. In FIG. 17, the biodiversity evaluation index is simply referred to as an evaluation index. An evaluation index (basic) is a result of calculation using the calculation algorithm (basic algorithm) according to the first embodiment. An evaluation index (high speed) is a result of calculation using the calculation algorithm (high-speed algorithm) according to the second embodiment.

Out of the mines shown in FIG. 17, only Mine 10 has a mining impact range intersecting a biological reserve. The output and purity of this mine are not so different from those of the remaining mines. However, since the mining impact range of Mine 10 intersects the biological reserve, the value of the biodiversity evaluation index of Mine 10 is much larger than those of the other mines. This indicates that Mine 10 greatly impacts biodiversity.

When the calculation results by the basic algorithm are compared to those by the high-speed algorithm, they match in all mines within the range of calculation error. In Mine 10 that intersects the biological reserve, the calculation result by the basic algorithm and that by the high-speed algorithm differ due to the above-described reason. However, since the difference is very small, the biodiversity evaluation indices of the calculation results shown in FIG. 17 have the same value. That is, the difference between the calculation result by the basic algorithm and that by the high-speed algorithm is not problematic in actual practice.

Additionally, as can be seen from FIG. 17, the biodiversity evaluation indices of the copper (Cu) mines are larger by one or two orders of magnitudes than those of the iron (Fe) mines. This is because the purity of copper ore is normally 1% or less, while the purity of iron ore is normally about 50%.

The basic algorithm and the high-speed algorithm will now be compared as regards the calculation time. To obtain the calculation result, the basic algorithm completed the calculation in about three hrs, and the high-speed algorithm completed it in 85 sec. The high-speed algorithm ends the processing in a shorter time than the basic algorithm. This is because only a small number of (one, in the above example) mines intersect the biological reserve.

(Third Embodiment)

In the third embodiment, a method of calculating the biodiversity evaluation index of a project (or product) using the biodiversity evaluation index of a mine calculated by the biodiversity evaluation index calculation apparatus according to the first embodiment will be described. Note that as the biodiversity evaluation index of the mine, the biodiversity evaluation index calculated by the biodiversity evaluation index calculation apparatus according to the second embodiment may be used.

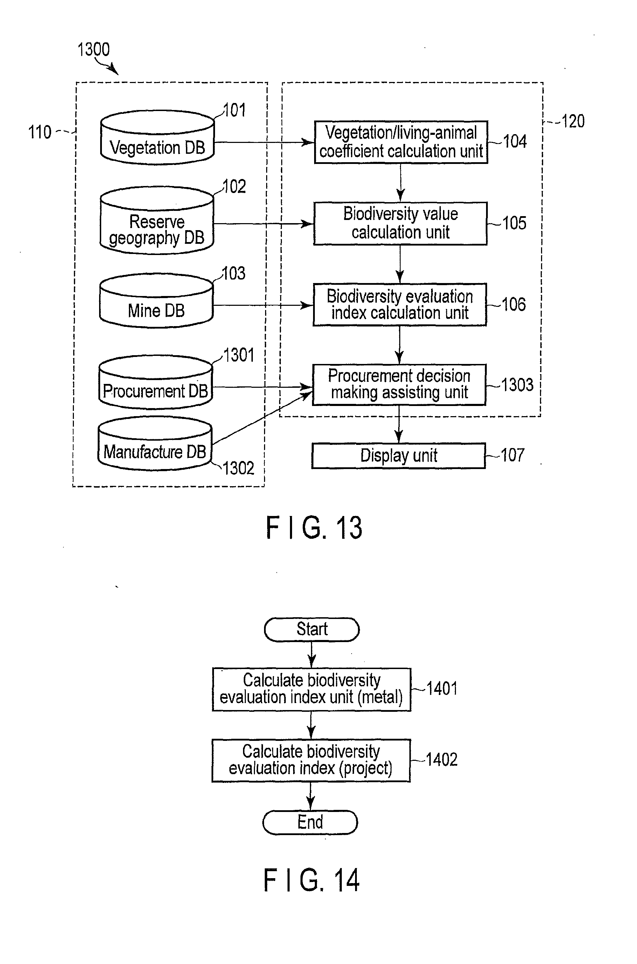

FIG. 13 schematically shows a biodiversity evaluation index calculation apparatus 1300 according to the third embodiment. The biodiversity evaluation index calculation apparatus 1300 shown in FIG. 13 includes a procurement database 1301, a manufacture database 1302, and a procurement decision making assisting unit 1303 in addition to the arrangement of the biodiversity evaluation index calculation apparatus 100 shown in FIG. 1. The procurement decision making assisting unit 1303 can be implemented by an arithmetic processing device 120. The procurement database 1301 and the manufacture database 1302 can be implemented by a storage device 110.

The procurement DB 1301 stores information representing mines where a company that is running a project procures metal resources, and mineral species procured from the mines and their procurement amounts. The manufacture DB 1302 stores information representing which metal resource is used and for what purpose in the project and the extent to which the metal resource is used. In the manufacturing industry, the manufacture DB 1302 stores information representing the extent of use of a metal resource, by product.

The procurement decision making assisting unit 1303 will be described with reference to FIG. 14.

In step S1401, the procurement decision making assisting unit 1303 calculates a biodiversity evaluation index unit for each metal resource used by the company based on the procurement DB 1301. The biodiversity evaluation index unit is obtained by adding a weight based on a procurement amount to the biodiversity evaluation index of each mine where a metal resource is procured and averaging the biodiversity evaluation indices. More specifically, assume that a company procures a given metal (for example, iron) from n mines in amounts of $w_i$ (i = 1, 2,..., n) kg, respectively. In addition, let $m_i$ (i = 1, 2,..., n) be the biodiversity evaluation index of each mine. At this time, the biodiversity evaluation index unit of the metal resource is calculated by

$$\text{Biodiversity evaluation index unit(metal)} = \frac{\sum_{i=1}^{n} m_i w_i}{\sum_{i=1}^{n} w_i} \qquad (10)$$

In step S1402, the procurement decision making assisting unit 1303 calculates the biodiversity evaluation index of the project from the amounts (kg) of metal resources used in the project and the biodiversity evaluation index units of the metal resources by

$$\text{BEI(project)} = \sum_{\text{Metal}} \text{BEIU(metal)} \times \text{Metal usage} \qquad (11)$$

where BEI (project) denotes the biodiversity evaluation index (project), and BEIU (metal) denotes the biodiversity evaluation index unit (metal).

The biodiversity evaluation index calculated by the procurement decision making assisting unit 1303 can be a value for the entire project or a value for one product manufactured by the company. In the present embodiment, the biodiversity evaluation index is calculated by referring to the procurement DB 1301 and the manufacture DB. However, the biodiversity evaluation index may be calculated based on data input by the user. For example, when the user inputs the procurement source, procurement amount, and the like of a mineral resource, the biodiversity evaluation index may be calculated in accordance with the user input. This allows the user to make a decision so as to reduce the impact on biodiversity when deciding the mineral species to be used in a project (product), the procurement source and procurement amount of the mineral species, and the like.

FIG. 15 shows an example of comparison between the biodiversity evaluation indices of a gasoline car and those of an electric vehicle. The copper usage is larger in the electric vehicle than in the gasoline car. As a result, the biodiversity evaluation index of the electric vehicle is set to a value higher than the biodiversity evaluation index of the gasoline car. Hence, the electric vehicle largely impacts biodiversity as compared to the gasoline car, as is apparent. This is because the volume of imports from mines having high biodiversity evaluation indices is large. When the procurement source is changed to mines having low biodiversity evaluation indices, the biodiversity evaluation index of the electric vehicle can be lowered to the level of the gasoline car.

As described above, according to the third embodiment, the apparatus is provided with the procurement decision making assisting unit 1303 that calculates the biodiversity evaluation index of a project (or product). This allows the user of a metal resource to easily evaluate the impact of the project (product) on biodiversity, and also makes it possible to change the project process so as to make the impact on biodiversity as small as possible.

(Fourth Embodiment)

In the above-described embodiments, the impact on biodiversity is evaluated for a mine that actually exists, based on the position of the mine, the mineral output, and the mineral purity. However, the subject of evaluation of mining impact on biodiversity is not limited to a mine that actually exists. At present, it is possible to estimate a resource reserve using various methods. The above-described embodiments are also applicable to evaluate, based on the estimation, what kind of impact can be exerted by extraction from a mine set up at a specific point.

As an example of a mineral deposit exploration method, a method of evaluating a mineral deposit by remote sensing using a satellite or aircraft capable of data acquisition across a wide area will briefly be described. When a mineral deposit is formed by crustal activities, an altered mineral is formed by the reaction between flowing hot water and rocks. The altered mineral is often arranged concentrically about a mineral deposit. As such an altered mineral, for example, alunite $(KAl_3(SO_4)_2(OH)_6)$ is known. Such an altered mineral has a reflectance spectrum unique to the substance. Hence, when reflections of a plurality of wavebands are measured by remote sensing, the distribution of the altered mineral on the ground surface can be obtained. Since the composition of the altered mineral depends on the mineral species contained in the mineral deposit, the mineral species can be estimated from remote sensing. In addition, the position (including the two-dimensional position and spread) of the mineral deposit can be estimated from the spatial distribution of the altered mineral.

To evaluate the depth of the mineral deposit, the purity of ores contained in it, and the like, mineral deposit exploration methods such as gravity exploration, magnetic exploration, and electromagnetic exploration are usable in addition to remote sensing. In particular, a survey using the boring can obtain high-resolution information of the depth, purity, and the like. Data obtained by these mineral deposit exploration methods will generically be referred to as mineral deposit exploration data.

When a mineral deposit can be estimated, a development plan of the mineral deposit can be created. That is, a virtual design and operation plan of the mine can be formed. More specifically, trial calculations can be made concerning the position of a pit, the purity of ores to be obtained therefrom, the output of the mineral, and the like. In the present embodiment, a method of calculating a biodiversity evaluation index based on the trial calculations will be described.

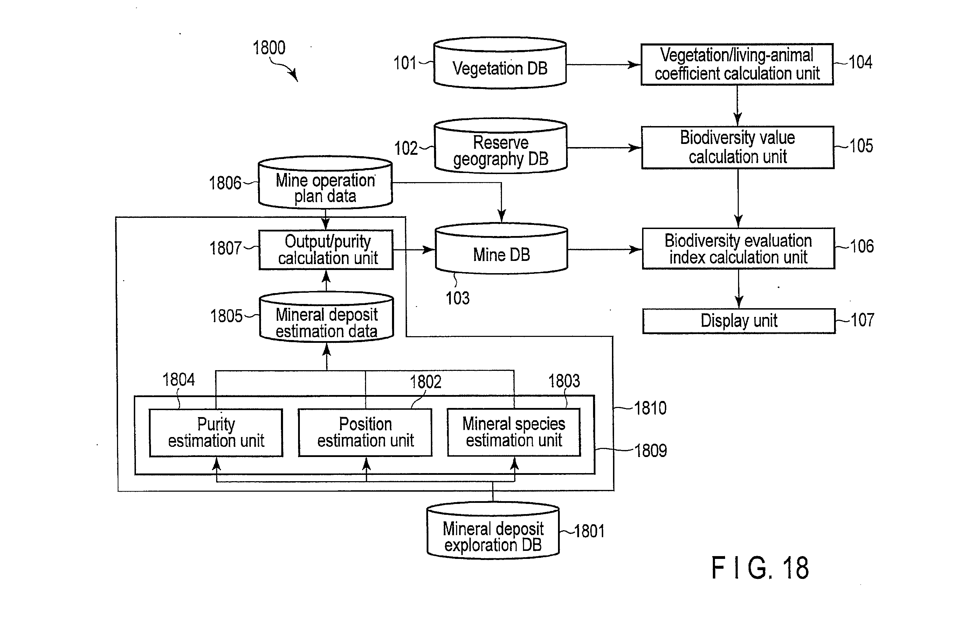

FIG. 18 shows a biodiversity evaluation index calculation apparatus 1800 according to the fourth embodiment. As shown in FIG. 18, the biodiversity evaluation index calculation apparatus 1800 includes a vegetation DB 101, a reserve geography DB 102, a mine DB 103, a vegetation/living-animal coefficient calculation unit 104, a biodiversity value calculation unit 105, a biodiversity evaluation index calculation unit 106, a display unit 107, and a virtual mine data generation unit 1810. The mine DB 103 according to the present embodiment stores data about a virtual mine generated by the virtual mine data generation unit 1810. The term virtual mine means, for example, a mine to be developed. Specifically, the virtual mine data generation unit 1810 includes a mineral deposit exploration DB 1801, a position estimation unit 1802, a mineral species estimation unit 1803, a purity estimation unit 1804, and an output/purity calculation unit 1807.

Mineral deposit exploration data is stored in the mineral deposit exploration DB 1801. The mineral deposit exploration data includes, for example, information of a reflectance spectrum on the ground surface observed by remote sensing (or information of the spatial distribution of an altered mineral obtained by remote sensing), and information of a mineral deposit depth and an ore purity obtained by boring exploration.

The position estimation unit 1802 estimates the position (including the spread and depth) of the mineral deposit from the spatial distribution of the altered mineral. The position estimation unit 1802 can more accurately estimate the depth of the mineral deposit using data obtained by boring exploration or the like together with the spatial distribution of the altered mineral. The mineral species estimation unit 1803 estimates the mineral species contained in the mineral deposit from the type of the altered mineral. The purity estimation unit 1804 estimates the purity of ores contained in the mineral deposit using data from, for example, boring exploration. Since the ore purity can change depending on the position in the mineral deposit, the purity estimation unit 1804 estimates the distribution of ore purities. The estimation results (that is, the position of the mineral deposit, the mineral species contained in the mineral deposit, and the purity of ores) of the position estimation unit 1802, the mineral species estimation unit 1803, and the purity estimation unit 1804 are given to the output/purity calculation unit 1807 as mineral deposit estimation data 1805. The position estimation unit 1802, the mineral species estimation unit 1803, and the purity estimation unit 1804 will generically be referred to as a mineral deposit estimation unit 1809.

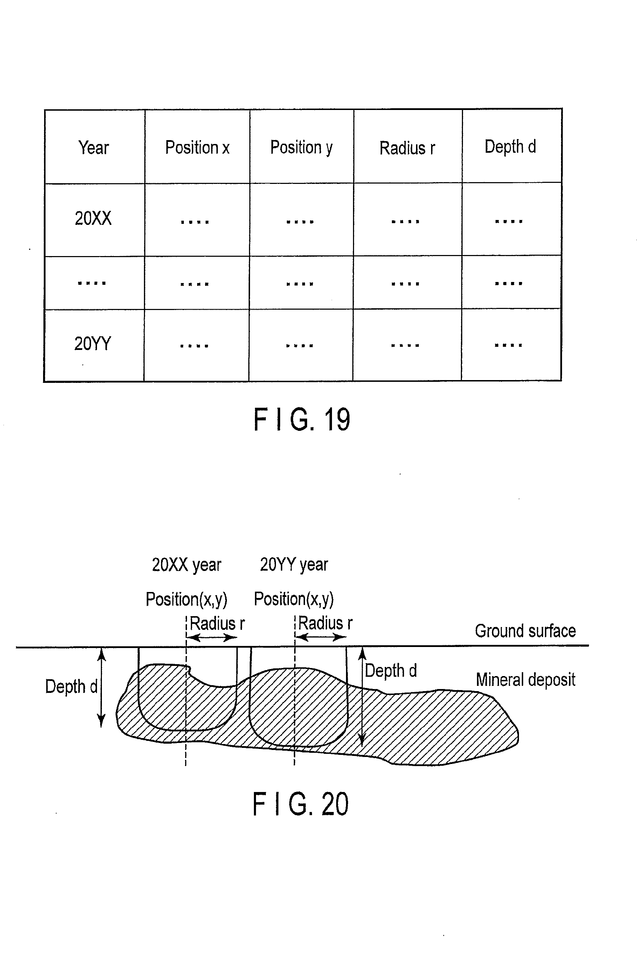

Mine operation plan data 1806 designates a mine operation plan (also referred to as a mine development plan) when forming a mine at the mineral deposit position, and is input by the operator or user. The mine operation plan data 1806 designates, for example, the position and scale (two-dimensional spread and depth) of a pit for every operation year of the mine to be developed. FIG. 19 is a view showing an example of the mine operation plan data 1806. In the example of FIG. 19, a pit position (x, y), a pit radius r, and a pit depth d are designated for every operation year. As shown in FIG. 20, the position (x, y) indicates, for example, the center, on the ground surface, of the region where a pit is dug, and is represented by the latitude and longitude. The radius r indicates the horizontal spread of the region where a pit is dug, and the depth d indicates the depth, from the ground surface, of the region where a pit is dug. Note that the mine operation plan data 1806 is not limited to the example shown in FIG. 19, and any data is usable as long as it can specify the position and scale of a pit.

The output/purity calculation unit 1807 calculates the amount of ores to be extracted and the purity of the ores in that place for every operation year based on the mineral deposit estimation data 1805 and the mine operation plan data 1806. The output/purity calculation unit 1807 also calculates the output of ores to be obtained for every operation year based on the amount of ores to be extracted and the purity of the ores. The output and purity calculated by the output/purity calculation unit 1807, the pit position (that is, mine position) included in the mine operation plan data 1806, and the mineral species included in the mineral deposit estimation data 1805 are stored in the mine DB 103 as virtual mine data. That is, the mine DB 103 according to the present embodiment stores data about the virtual mine by associating the position, output, purity, and mineral species with each other for every operation year.

In the present embodiment, virtual mine data generated by the virtual mine data generation unit 1810 is stored in the mine DB 103. The biodiversity evaluation index calculation unit 106 can thus calculate the biodiversity evaluation index of the virtual mine. When the impact on biodiversity is evaluated in this way before the start of mine development, the mine can be developed with little impact on biodiversity.

(Fifth Embodiment)

Soil after extraction is heaped up around a mine. If it rains around the mine, toxic substances contained in the soil flow into groundwater and diffuse around the mine. Diffusion of toxic substances by rain is assumed to impact biodiversity. In the fifth embodiment, a method of including such an impact of rain in a biodiversity evaluation index will be described.

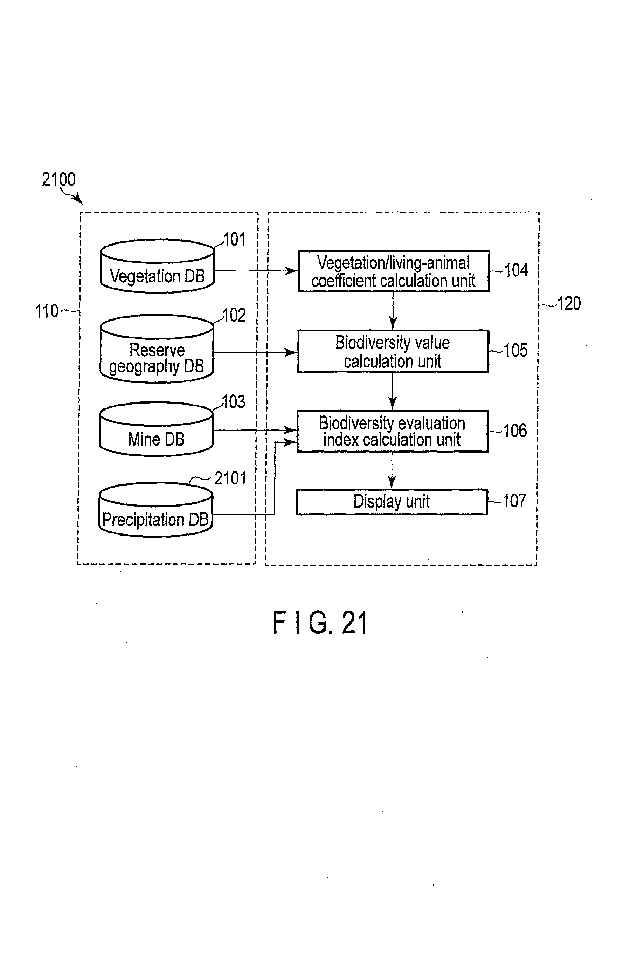

FIG. 21 schematically shows a biodiversity evaluation index calculation apparatus 2100 according to the fifth embodiment. The biodiversity evaluation index calculation apparatus 2100 shown in FIG. 21 includes a precipitation database (DB) 2101 in addition to the arrangement of the biodiversity evaluation index calculation apparatus 100 shown in FIG. 1. Data about precipitation is stored in the precipitation DB 2101. The precipitation is recorded, for example, on a cell basis or another region basis.

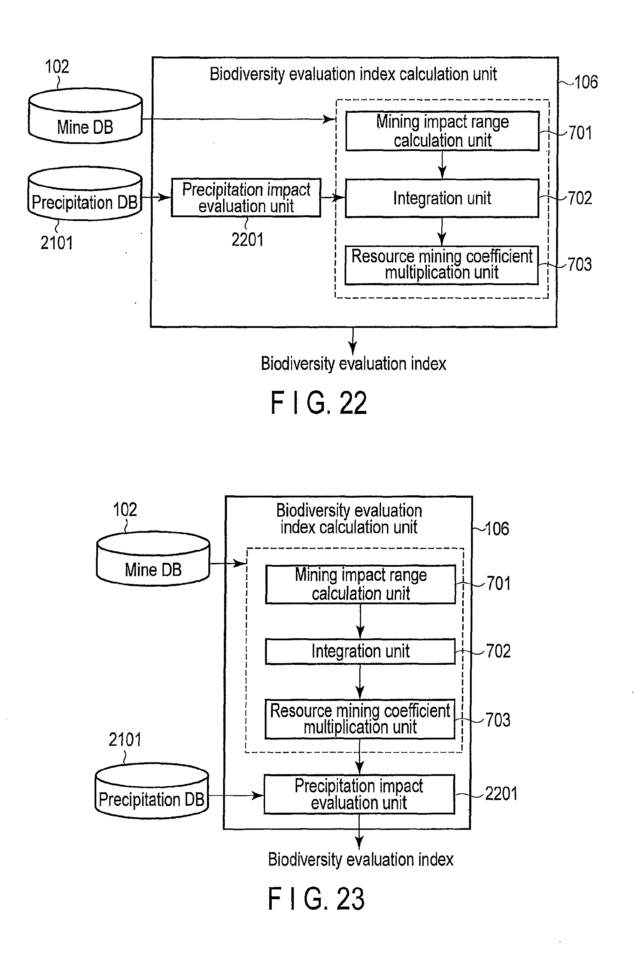

A biodiversity evaluation index calculation unit 106 according to the present embodiment calculates a biodiversity evaluation index including the impact of rain by referring to the precipitation DB 2101 in addition to a mine DB 103. More specifically, as shown in FIG. 22, the biodiversity evaluation index calculation unit 106 includes a mining impact range calculation unit 701, an integration unit 702, a resource mining coefficient multiplication unit 703, and a precipitation impact evaluation unit (also referred to as a precipitation impact index calculation unit) 2201. The precipitation impact evaluation unit 2201 evaluates a precipitation impact index based on the precipitation recorded in the precipitation DB 2101. The precipitation impact index is used to reflect the impact of rain on the biodiversity evaluation index.

Many variations are possible for the arrangement of the biodiversity evaluation index calculation unit 106 including the precipitation impact evaluation unit 2201. In the present embodiment, three arrangement examples of the biodiversity evaluation index calculation unit 106 will be explained.

FIG. 23 schematically shows the biodiversity evaluation index calculation unit 106 according to a first example of the present embodiment. In the first example, a biodiversity evaluation index calculated by any one of the methods described in the first to fourth embodiments is multiplied by a factor (that is, precipitation impact index) used to reflect the impact of rain, thereby calculating a biodiversity evaluation index including the impact of rain.

The precipitation impact evaluation unit 2201 calculates the precipitation impact index based on the precipitation at the mine position. When the precipitation is recorded for each cell, the precipitation at the mine position is, for example, the average value of precipitations of cells included in the mining impact range calculated by the mining impact range calculation unit 701. In addition, the precipitation impact evaluation unit 2201 obtains the biodiversity evaluation index (precipitation) by multiplying the biodiversity evaluation index calculated by the resource mining coefficient multiplication unit 703 by the calculated precipitation impact index, as indicated by

$$\text{Biodiversity evaluation index} = \text{Biodiversity}$$
$$\text{evaluation index calculated by equation (7)} \times \text{Precipitation}$$
$$\text{impact index} \tag{12}$$

The biodiversity evaluation index (precipitation) of equation (12) represents the biodiversity evaluation index including the impact of rain.

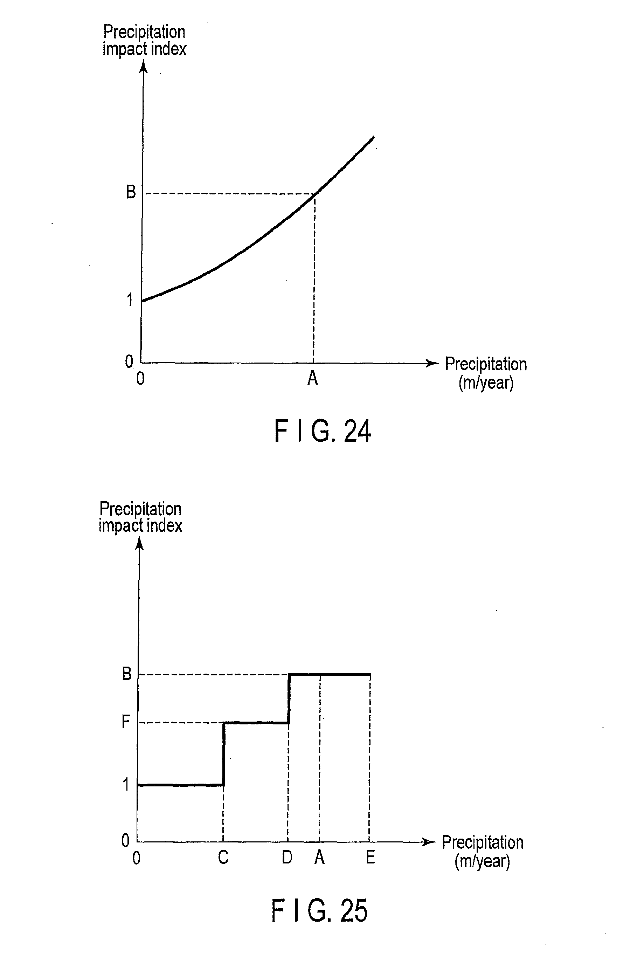

Various methods can be used as the method of setting the precipitation impact index. FIG. 24 shows an example of a method for determining the precipitation impact index. In the example of FIG. 24, the precipitation impact index is set to be larger as precipitation increases. When the annual precipitation is 0 m, rain does not impact the biodiversity evaluation index, and the precipitation impact index is set to 1. Assume that observation data has been obtained which represents that when the annual precipitation is A m, the toxic substance inflow to groundwater increases by a factor of B. Based on this observation data, when the annual precipitation is A m, the precipitation impact index is set to B. The graph shown in FIG. 24 can be obtained by smoothly connecting two known points (0, 1) and (A, B). The point (A, B) may be based on theoretical estimation. The method of estimating a curve representing the precipitation impact index from one observed value has been described here. When observed values are obtained for a plurality of mines or a plurality of precipitations, the curve can be estimated by interpolation, fitting, or the like.

FIG. 25 shows another example of the method of determining the precipitation impact index. In the example of FIG. 25, the precipitation impact index changes stepwise with respect to the precipitation. More specifically, when the annual precipitation is 0 m (inclusive) to C m (exclusive), the precipitation impact index is set to 1. When the annual precipitation is C m (inclusive) to D m (exclusive), the precipitation impact index is set to F. When the annual precipitation is D m (inclusive) to E m (exclusive), the precipitation impact index is set to B. In this case, $0 < C < D < A < E$, and $1 < F < B$.

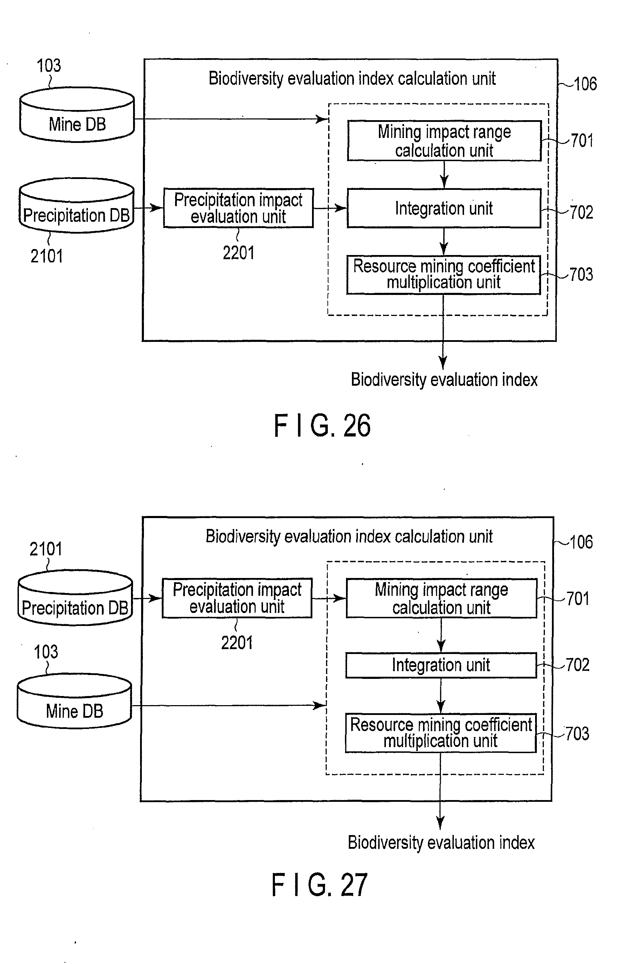

FIG. 26 schematically shows the biodiversity evaluation index calculation unit 106 according to a second example of the present embodiment. In the second example, the total precipitation in the mining impact range is taken into consideration. As shown in FIG. 8, a mine has a mining impact range $r_a$ according to its scale. When it rains in the mining impact range $r_a$, toxic substances are considered to flow into groundwater.

In the second example, the precipitation impact evaluation unit 2201 determines the precipitation impact index for each of cells within the mining impact range. Determination of the precipitation impact index can be executed in accordance with the method described in the first example. At this time, annual precipitation is used for precipitation.

The integration unit 702 calculates an integrated value by adding the biodiversity values of cells within the mining impact range using the precipitation impact indices calculated for the cells by the precipitation impact evaluation unit 2201. For example, the integration unit 702 calculates the integrated value by

$$\text{Integrated value} = \sum_{\text{Cell}\, i \in \text{Mining impact range}} \left[ \beta_i \times \text{Biodiversity value} \times \text{Precipitaion impact index} \right]$$

$$(13)$$

The biodiversity value is calculated by a biodiversity value calculation unit 105 in accordance with equation (2). $\beta_i$ is the ratio of the area of a portion where a cell i and the mining impact range overlap to the area of the cell i, as in equation (5).

When the integrated value is calculated in accordance with equation (13), the effect of planar spread of the mining impact range and the effect of the precipitations of cells within the range can be included in the biodiversity evaluation index.

That is, the biodiversity evaluation index calculation unit 106 of Example 2 calculates the biodiversity evaluation index by,

$$\text{BEI} = \left[ \sum_{\text{Cell}\, i \in \text{Reserve} \cap \text{Mining impact range}} \text{VLC} \times \left(1 - \alpha_i + \alpha_i \times \text{RC}\right) \times \text{PII} \right] \times \text{RMC} \qquad (14)$$

where BEI denotes the biodiversity evaluation index, VLC denotes the vegetation/living-animal coefficient, RC denotes the reserve coefficient, PII denotes the precipitation impact index, and RMC denotes the resource mining coefficient.

FIG. 27 schematically shows the biodiversity evaluation index calculation unit 106 according to a third example of the present embodiment. In the third example, the effect of expanding the range of impact on biodiversity in accordance with the outflow of toxic substances (also referred to as biodiversity impact substances) via groundwater is adopted. This effect can be included in the biodiversity evaluation index by expanding the mining impact range in accordance with the precipitation.

The mining impact range calculation unit 701 calculates a mining impact range $r_a'$ after considering the precipitation impact by correcting the mining impact range $r_a$ (calculated by, for example, equation (3)) without considering the precipitation using the precipitation impact index determined by the precipitation impact evaluation unit 2201. For example, the mining impact range $r_a'$ after considering the precipitation impact is calculated by

$$r_a' = r_a \times \text{Precipitation impact index} \qquad (15)$$

That is, the precipitation impact index is given as a coefficient representing the relative difference in range between mining impact range $r_a'$, which includes the precipitation impact, and mining impact range $r_a$, which ignores precipitation.

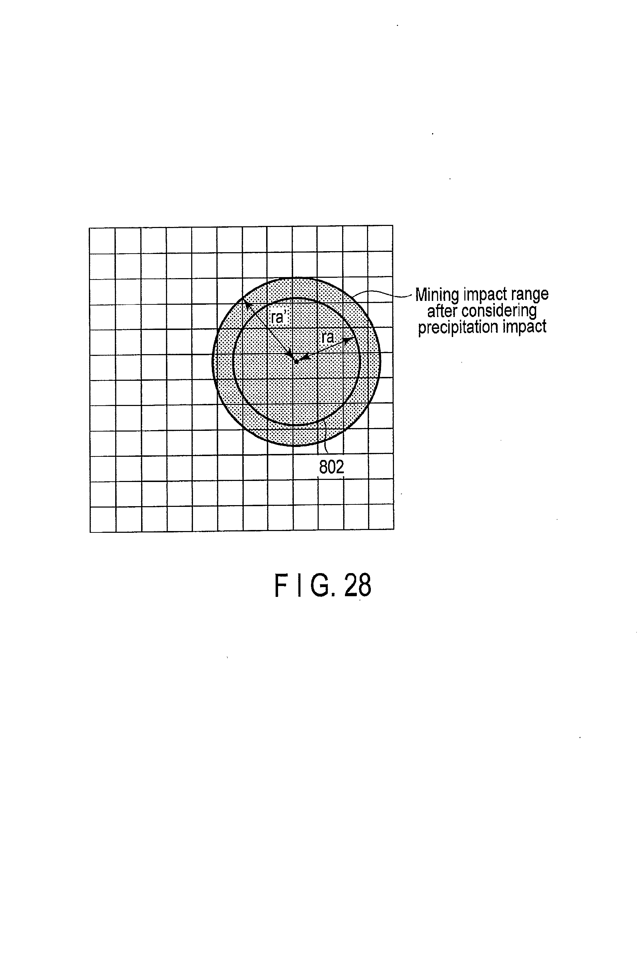

The mining impact range $r_a'$ that includes the precipitation impact is larger than the mining impact range $r_a$ that ignores the precipitation, as shown in FIG. 28. In the second example, the mining impact range $r_a'$ that includes the precipitation impact is used to calculate the integrated value by the integration unit 702. When the mining impact range is expanded in accordance with the precipitation in the above way, the impact of rain can be included in the biodiversity evaluation index.

In the third example, the precipitation impact index is estimated by estimating how far the toxic substances can spread due to the groundwater. Assume that it is estimated by observation or theoretical estimation that the toxic substances contained in the soil discharged from the mine when the annual precipitation at the mine position is A m have spread to an extent of the radius $r_a'$ km. A precipitation impact index b at this time can be calculated by

$$B = r_a' / r_a \qquad (16)$$

For example, when it is found by observation that the toxic substances from a mine with a mining impact range $r_a$ estimated at 10 km that ignores precipitation have actually spread 12 kmmining impact range, the precipitation impact index is 1.2. In this case, the relationship between the precipitation and the precipitation impact index can be determined by smoothly connecting two points (0, 1) and (A, 1.2), as shown in FIG. 24 or connecting the two points stepwise, as shown in FIG. 25. The method of estimating the relationship between the precipitation and the precipitation impact index from one observed value has been described here. When observed values are obtained for a plurality of mines or a plurality of precipitation amounts, the curve can be estimated by interpolation, fitting, or the like.

The above-described three methods quantitatively include the precipitation impact from three independent points of view. Hence, the precipitation impact can also be evaluated by combining the three methods.

As described above, the biodiversity evaluation index calculation apparatus according to the present embodiment can include the impact of rain in the biodiversity evaluation index by evaluating the precipitation impact index in accordance with the precipitation and calculating the biodiversity evaluation index using the precipitation impact index. This makes it possible to quantitatively evaluate the mining impact, including the impact of rain, on biodiversity.

An instruction shown in the processing procedures of the above-described embodiments can be executed based on a program, i.e., software. When a general-purpose computer system stores such program in advance and loads it, the same effects as those of the above-described biodiversity evaluation index calculation apparatuses can be obtained. Each instruction described in the above embodiments can be recorded on a magnetic disk (for example, flexible disk or hard disk), an optical disk (for example, CD-ROM, CD-R, CD-RW, DVD-ROM, DVD±R, or DVD±RW), a semiconductor memory, or a similar recording medium as a program executable by a computer. Any storage format is employable as long as the recording medium is readable by a computer or an embedded system. When the computer loads the program from the recording medium, and causes the CPU to execute the instruction described in the program based on the program, the same operation as the biodiversity evaluation index calculation apparatuses according to the above-described embodiments can be implemented. When the computer acquires or loads the program, it may be acquired or loaded via a network, as a matter of course.

An OS (Operating System) operating on the computer or MW (middleware) such as database management software or a network may execute part of the processing for implementing the embodiments based on the instruction of the program installed from the recording medium to the computer or embedded system.

The recording medium according to the embodiments is not limited to a medium independent of the computer or embedded system, and also includes a recording medium that stores or temporarily stores the program downloaded via a LAN or the Internet.

The number of recording media is not limited to one. The recording medium according to the embodiments also incorporates a case where the processing of the embodiments is executed from a plurality of media, and the media can have any arrangement.

Note that the computer or embedded system according to the embodiments is configured to execute each processing of the embodiments based on the program stored in the recording medium, and can be either a single device formed from a personal computer or microcomputer or a system including a plurality of devices connected via a network.

The computer according to the embodiments is not limited to a personal computer, and also includes an arithmetic processing device or microcomputer included in an information processing apparatus. The term computer broadly refers to apparatuses and devices capable of implementing the functions of the embodiments by the program.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A biodiversity evaluation index calculation apparatus **characterized by** comprising:

a first calculation unit configured to calculate, for each of a plurality of regions, a vegetation/living-animal coefficient by referring to a vegetation database which stores data about vegetation classifications, the vegetation/living-animal coefficient representing at least one of diversity of plant species and diversity of animal species;
a second calculation unit configured to calculate, for each of the plurality of regions, a biodiversity value based on a type of a reserve and the vegetation/living-animal coefficient by referring to a reserve geography database which describes a type and a range for each of a plurality of reserves, the biodiversity value representing biodiversity richness; and
a third calculation unit configured to calculate, for each of a plurality of mines, a biodiversity evaluation index by referring to a mine database which describes a position, an output, a purity, and a mineral species for each of the plurality of mines, the biodiversity evaluation index representing a mining impact on biodiversity, the third calculation unit calculating a mining impact range, which represents a range of an impact of mining on a peripheral environment, based on the output, the purity, and the mineral species, specifying one or more of regions included in the mining impact range out of the plurality of regions, and calculating the biodiversity evaluation index by adding biodiversity values of the one or more of regions.

2. The biodiversity evaluation index calculation apparatus according to claim 1, **characterized in that** the second calculation unit calculates the biodiversity value for each of the one or more regions included in the mining impact range out of the plurality of regions.

3. The biodiversity evaluation index calculation apparatus according to claim 1 or 2, **characterized by** further comprising a fourth calculation unit configured to calculate, based on the biodiversity evaluation index calculated for each of the plurality of mines, a biodiversity evaluation index of a product by referring to a manufacture database which describes a type, a procurement source, and a usage for each of a plurality of metal resources to be used for the product.

4. The biodiversity evaluation index calculation apparatus according to claim 1, **characterized by** further comprising a generation unit configured to generate data about a mine to be developed, which is to be recorded in the mine database,
the generation unit comprising:

a mineral deposit estimation unit configured to estimate a position of a mineral deposit, a mineral species contained in the mineral deposit, and a purity of an ore contained in the mineral deposit based on mineral deposit exploration data including a reflectance spectrum on a ground surface observed by remote sensing and to generate mineral deposit estimation data; and
a fifth calculation unit configured to calculate, as the purity and the output described in the mine database, the calculated output corresponding to the output described in the mine database, a purity of the ore obtained from the mineral deposit and an output of a mineral contained in the ore based on the mineral deposit estimation data and mine operation plan data representing a development plan of the mineral deposit.

5. The biodiversity evaluation index calculation apparatus according to claim 1, **characterized by** further comprising a sixth calculation unit configured to calculate a precipitation impact index based on a precipitation around the mine, which is obtained from a precipitation database storing data about a precipitation, and calculate a biodiversity evaluation index including an impact of rain by multiplying the biodiversity evaluation index calculated by the third calculation unit by the calculated precipitation impact index.

6. The biodiversity evaluation index calculation apparatus according to claim 1, **characterized by** further comprising a sixth calculation unit configured to calculate, for each of the one or more regions, a precipitation impact index based on a precipitation around the mine, which is obtained from a precipitation database storing data about a precipitation,
wherein the third calculation unit multiplies the biodiversity index by the precipitation impact index when adding the biodiversity value of the one or more regions.

7. The biodiversity evaluation index calculation apparatus according to claim 1, **characterized by** further comprising a sixth calculation unit configured to calculate a precipitation impact index based on a precipitation around the mine, which is obtained from a precipitation database storing data about a precipitation,
wherein the third calculation unit calculates the mining impact range based on the output, the purity, and the precipitation impact index.

8. A biodiversity evaluation index calculation method **characterized by** comprising:

a step of calculating, by a first calculation unit for each of a plurality of regions, a vegetation/living-animal coefficient by referring to a vegetation database which stores data about vegetation classifications, the vegetation/living-animal coefficient representing at least one of diversity of plant species and diversity of animal species;
a step of calculating, by a second calculation unit for each of the plurality of regions, a biodiversity value based on a type of a reserve and the vegetation/living-animal coefficient by referring to a reserve geography database which describes a type and a range for each of a plurality of reserves, the biodiversity value representing biodiversity richness; and
a step of calculating, by a third calculation unit for each of a plurality of mines, a biodiversity evaluation index by referring to a mine database which describes a position, an output, a purity, and a mineral species for each of the plurality of mines, the biodiversity evaluation index representing a mining impact on biodiversity, the step of calculating the biodiversity evaluation index comprising calculating a mining impact range, which represents a range of an impact of mining on a peripheral environment, based on the output, the purity, and the mineral species, specifying one or more of regions included in the mining impact range out of the plurality of regions, and calculating the biodiversity evaluation index by adding biodiversity values of the one or more of regions.

9. The biodiversity evaluation index calculation method according to claim 8, **characterized in that** the step of calculating the biodiversity value comprises a step of calculating the biodiversity value for each of the one or more regions included in the mining impact range out of the plurality of regions.

10. The biodiversity evaluation index calculation method according to claim 8 or 9, **characterized by** further comprising a step of calculating, by a fourth calculation unit based on the biodiversity evaluation index calculated for each of the plurality of mines, a biodiversity evaluation index of a product by referring to a manufacture database which describes a type, a procurement source, and a usage for each of a plurality of metal resources to be used for the product.

11. The biodiversity evaluation index calculation method according to claim 8, **characterized by** further comprising a step of generating data about a mine to be developed, which is to be recorded in the mine database,
the step of generating the virtual mine data comprising:

a step of estimating a position of a mineral deposit, a mineral species contained in the mineral deposit, and a purity of an ore contained in the mineral deposit based on mineral deposit exploration data including a reflectance spectrum on a ground surface observed by remote sensing and to generate mineral deposit estimation data; and
a step of calculating, as the purity and the output described in the mine database, the calculated output corresponding to the output described in the mine database, a purity of the ore obtained from the mineral deposit and an output of a mineral contained in the ore based on the mineral deposit estimation data and mine operation plan data representing a development plan of the mineral deposit.

12. The biodiversity evaluation index calculation method according to claim 8, **characterized by** further comprising a step of calculating, by a sixth calculation unit, a precipitation impact index based on a precipitation around the mine, which is obtained from a precipitation database storing data about a precipitation, and calculating a biodiversity evaluation index including an impact of rain by multiplying the biodiversity evaluation index calculated by the third calculation unit by the calculated precipitation impact index.

13. The biodiversity evaluation index calculation method according to claim 8, **characterized by** further comprising a step of calculating, by a sixth calculation unit for each of the one or more regions, a precipitation impact index based on a precipitation around the mine, which is obtained from a precipitation database storing data about a precipitation, wherein the step of calculating the biodiversity evaluation index comprises multiplying the biodiversity index by the precipitation impact index when adding the biodiversity values of the one or more regions.

14. The biodiversity evaluation index calculation method according to claim 8, **characterized by** further comprising a step of calculating, by a six calculation unit, a precipitation impact index based on a precipitation around the mine, which is obtained from a precipitation database storing data about a precipitation, wherein the step of calculating the biodiversity evaluation index comprises calculating the mining impact range based on the output, the purity, and the precipitation impact index.

15. A program **characterized by** causing a computer to function as:

first calculation means for calculating, for each of a plurality of regions, a vegetation/living-animal coefficient by referring to a vegetation database which stores data about vegetation classifications, the vegetation/living-animal coefficient representing at least one of diversity of plant species and diversity of animal species;
second calculation means for calculating, for each of the plurality of regions, a biodiversity value based on a type of a reserve and the vegetation/living-animal coefficient by referring to a reserve geography database which describes a type and a range for each of a plurality of reserves, the biodiversity value representing biodiversity richness; and
third calculation means for calculating, for each of a plurality of mines, a biodiversity evaluation index by referring to a mine database which describes a position, an output, a purity, and a mineral species for each of the plurality of mines, the biodiversity evaluation index representing a mining impact on biodiversity, the third calculation means comprising calculating a mining impact range, which represents a range of an impact of mining on a peripheral environment, based on the output, the purity, and the mineral species, specifying one or more of regions included in the mining impact range out of the plurality of regions, and calculating the biodiversity evaluation index by adding biodiversity values of the one or more of regions.

16. The program according to claim 15, **characterized in that** the second calculation means calculates the biodiversity value for each of the one or more regions included in the mining impact range out of the plurality of regions.

17. The program according to claim 15 or 16, **characterized by** further causing the computer to function as fourth calculation means for calculating, based on the biodiversity evaluation index calculated for each of the plurality of mines, a biodiversity evaluation index of a product by referring to a manufacture database which describes a type, a procurement source, and a usage for each of a plurality of metal resources to be used for the product.

18. The program according to claim 15, **characterized by** further causing the computer to function as generation means for generating data about a mine to be developed, which is to be recorded in the mine database, the generation means comprising:

estimating a position of a mineral deposit, a mineral species contained in the mineral deposit, and a purity of an ore contained in the mineral deposit based on mineral deposit exploration data including a reflectance spectrum on a ground surface observed by remote sensing and to generate mineral deposit estimation data; and calculating, as the purity and the output described in the mine database, the calculated output corresponding to the output described in the mine database, a purity of the ore obtained from the mineral deposit and an output of a mineral contained in the ore based on the mineral deposit estimation data and mine operation plan data representing a development plan of the mineral deposit.

19. The program according to claim 15, **characterized by** further causing the computer to function as sixth calculation means for calculating a precipitation impact index based on a precipitation around the mine, which is obtained from a precipitation database storing data about a precipitation, and calculating a biodiversity evaluation index including an impact of rain by multiplying the biodiversity evaluation index calculated by the third calculation means by the calculated precipitation impact index.

20. The program according to claim 15, **characterized by** further causing the computer to function as sixth calculation means for calculating, for each of the one or more regions, a precipitation impact index based on a precipitation around the mine, which is obtained from a precipitation database storing data about a precipitation, wherein the third calculation means multiply the biodiversity value by the precipitation impact index when adding the biodiversity values of the one or more regions.

21. The program according to claim 15, **characterized by** further causing the computer to function as sixth calculation means for calculating a precipitation impact index based on a precipitation around the mine, which is obtained from a precipitation database storing data about a precipitation,

wherein the third calculation means calculate the mining impact range based on the output, the purity, and the precipitation impact index.

F I G. 1

| Classification number | English name | Vegetation/living-animal coefficient |
|:---:|:---:|:---:|
| 0 | Water | - |
| 1 | Evergreen Needleleaf Forest | V1 |
| 2 | Evergreen Broadleaf Forest | V2 |
| 3 | Deciduous Needleleaf Forest | V3 |
| 4 | Deciduous Broadleaf Forest | V4 |
| 5 | Mixed Forest | V5 |
| 6 | Woodland | V6 |
| 7 | Wooded Grassland | V7 |
| 8 | Closed Shrubland | V8 |
| 9 | Open Shrubland | V9 |
| 10 | Grassland | V10 |
| 11 | Cropland | V11 |
| 12 | Bare Ground | V12 |
| 13 | Urban and Built | V13 |

F I G. 2

Array of vegetation data         Array of vegetation/
living-animal coefficients

# FIG. 3

| Reserve classification number | Reserve coefficient |
|---|---|
| I a | P1 |
| I b | P2 |
| II | P3 |
| III | P4 |
| IV | P5 |
| V | P6 |
| VI | P7 |
| Uncategorized | P8 |
| Unprotected area | P9 |

# FIG. 4

F I G. 5

F I G. 6

```
┌─────────────────────────────┐
│   Mining impact range       │
│   calculation unit          │── 701
└─────────────────────────────┘
              │
              ▼
┌─────────────────────────────┐
│     Integration unit        │── 702
└─────────────────────────────┘
              │
              ▼
┌─────────────────────────────┐
│ Resource mining coefficient │── 703
│   multiplication unit       │
└─────────────────────────────┘
```

# F I G. 7

# F I G. 8

F I G. 9

F I G. 10

F I G. 11

Start

Extract one mine — S1201

Register mine in mine
position management unit — S1202

S1203
Unregistered
mine?

yes

no

Extract one reserve — S1204

S1205
Mine that
intersects reserve
?

no

yes

S1206
Process reserve and mine

S1207
Unprocessed
mine?

yes

no

S1208
Unprocessed
reserve?

yes

no

End

FIG. 12

1300

110 ~

101
Vegetation DB

102
Reserve
geography DB

103
Mine DB

1301
Procurement DB

Manufacture DB
1302

~120

Vegetation/living-animal
coefficient calculation unit ~104

Biodiversity value
calculation unit ~105

Biodiversity evaluation
index calculation unit ~106

Procurement decision
making assisting unit ~1303

Display unit ~107

F I G. 13

Start

Calculate biodiversity
evaluation index unit (metal) ~1401

Calculate biodiversity
evaluation index (project) ~1402

End

F I G. 14

F I G. 15

F I G. 16

| Mine name | Product | Output (Kt) | Purity[0,1] | Radius (Km) | Evaluation index (basic) | Evaluation index (high speed) |
|---|---|---|---|---|---|---|
| Mine 1 | Fe | $4.2 \times 10^4$ | 0.6 | 7.5 | 722 | 722 |
| Mine 2 | Fe | $8.7 \times 10^3$ | 0.6 | 4.4 | 241 | 241 |
| Mine 3 | Fe | $2.0 \times 10^4$ | 0.6 | 5.8 | 423 | 423 |
| Mine 4 | Fe | $1.1 \times 10^4$ | 0.6 | 4.8 | 286 | 286 |
| Mine 5 | Fe | $3.2 \times 10^4$ | 0.6 | 7.0 | 669 | 669 |
| Mine 6 | Fe | $9.3 \times 10^3$ | 0.6 | 4.5 | 227 | 257 |
| Mine 7 | Fe | $2.1 \times 10^4$ | 0.6 | 5.9 | 455 | 455 |
| Mine 8 | Fe | $3.4 \times 10^3$ | 0.6 | 3.2 | 45 | 45 |
| Mine 9 | Fe | $8.3 \times 10^3$ | 0.6 | 4.4 | 264 | 264 |
| Mine 10 | Fe | $1.5 \times 10^4$ | 0.6 | 5.3 | 1,728 | 1,728 |
| Mine 11 | Fe | $7.0 \times 10^3$ | 0.6 | 4.2 | 230 | 230 |
| Mine 12 | Fe | $3.6 \times 10^4$ | 0.6 | 7.1 | 627 | 627 |
| Mine 13 | Fe | $2.8 \times 10^4$ | 0.6 | 6.5 | 506 | 506 |
| Mine 14 | Fe | $6.6 \times 10^3$ | 0.6 | 4.0 | 201 | 201 |
| Mine 15 | Fe | $2.0 \times 10^4$ | 0.6 | 5.8 | 423 | 423 |
| Mine 16 | Fe | $3.0 \times 10^4$ | 0.6 | 6.8 | 606 | 606 |
| Mine 17 | Fe | $4.7 \times 10^4$ | 0.6 | 8.0 | 887 | 887 |
| Mine 18 | Fe | $5.2 \times 10^4$ | 0.6 | 8.0 | 797 | 797 |
| Mine 19 | Cu | $1.6 \times 10^2$ | 0.02 | 4.1 | 7,323 | 7,323 |
| Mine 20 | Cu | $1.6 \times 10^2$ | 0.01 | 4.8 | 22,505 | 22,504 |
| Mine 21 | Cu | $9.6 \times 10^1$ | 0.01 | 3.7 | 9,770 | 9,770 |

F I G. 17

EP 2 830 015 A1

F I G. 18

EP 2 830 015 A1

| Year | Position x | Position y | Radius r | Depth d |
|------|-----------|-----------|----------|---------|
| 20XX | . . . . | . . . . | . . . . | . . . . |
| . . . . | . . . . | . . . . | . . . . | . . . . |
| 20YY | . . . . | . . . . | . . . . | . . . . |

F I G. 19

20XX year    20YY year

Position(x,y)  Position(x,y)

Radius r    Radius r    Ground surface

Depth d    Depth d    Mineral deposit

F I G. 20

2100

101
Vegetation DB

102
Reserve geography DB

103
Mine DB

2101
Precipitation DB

110

120

104
Vegetation/living-animal coefficient calculation unit

105
Biodiversity value calculation unit

106
Biodiversity evaluation index calculation unit

107
Display unit

F I G. 21

EP 2 830 015 A1

Biodiversity evaluation index calculation unit ~106

102

Mine DB

Precipitation DB  
2101

Precipitation impact evaluation unit  
2201

Mining impact range calculation unit ~701

Integration unit ~702

Resource mining coefficient multiplication unit ~703

Biodiversity evaluation index

F I G. 22

102

Mine DB

2101

Precipitation DB

Biodiversity evaluation index calculation unit ~106

Mining impact range calculation unit ~701

Integration unit ~702

Resource mining coefficient multiplication unit ~703

Precipitation impact evaluation unit ~2201

Biodiversity evaluation index

F I G. 23

Precipitation
impact index

B

1

0

0                                    A            Precipitation
                                                  (m/year)

F I G. 24

Precipitation
impact index

B

F

1

0

0          C          D   A      E   Precipitation
                                      (m/year)

F I G. 25

F I G. 26

F I G. 27

Mining impact range
after considering
precipitation impact

F I G. 28

<div align="center">**INTERNATIONAL SEARCH REPORT**</div>

| International application No. |
|---|
| PCT/JP2013/057872 |

**A. CLASSIFICATION OF SUBJECT MATTER**
*G06Q50/00*(2012.01)i, *G06Q50/10*(2012.01)i

According to International Patent Classification (IPC) or to both national classification and IPC

**B. FIELDS SEARCHED**

Minimum documentation searched (classification system followed by classification symbols)
G06Q50/00, G06Q50/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-102606 A (Taisei Corp.), 02 April 2004 (02.04.2004), entire text; all drawings (Family: none) | 1-21 |
| A | JP 2002-247900 A (Electric Power Development Co., Ltd.), 30 August 2002 (30.08.2002), entire text; all drawings (Family: none) | 1-21 |
| A | JP 2003-102326 A (Kajima Corp.), 08 April 2003 (08.04.2003), entire text; all drawings (Family: none) | 1-21 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 April, 2013 (30.04.13) | 14 May, 2013 (14.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/057872

C (Continuation). DOCUMENTS CONSIDERED TO BE RELEVANT

| Category* | Citation of document, with indication, where appropriate, of the relevant passages | Relevant to claim No. |
|---|---|---|
| A | Tsutomu KAWAGUCHI, "Applying ICT in Biodiversity Surveys and Evaluations of Impact on Biodiversity", FUJITSU, 10 November 2011 (10.11.2011), vol.62, no.6, pages 745 to 752 | 1-21 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003102326 A